# EUROPEAN PATENT SPECIFICATION

(11) **EP 2 153 092 B1**
(45) Date of publication and mention of the grant of the patent: **14.06.2017**
(21) Application number: 08737142.3
(22) Date of filing: 30.04.2008
(51) Int. Cl.: F16J 15/32

(54) **HYDRODYNAMIC SEALING ELEMENT**
HYDRODYNAMISCHE DICHTUNGSELEMENT
ÉLÉMENT D'ÉTANCHÉITÉ HYDRODYNAMIQUE

(30) Priority: 30.04.2007 GB 0708364
(43) Date of publication of application: 17.02.2010
(73) Proprietor: James Walker & Co. LTD., Cumbria CA13 0NH (GB)
(72) Inventor: WARREN, Peter, John, Cumbria CA13 0BL (GB); ELLIOTT, Godfrey, Duncan, Surrey GU1 1QT (GB)
(74) Representative: Hamer, Christopher K.
(86) International application number: PCT/GB2008/001506
(87) International publication number: WO 2008/132482

(56) References cited:
- EP-A- 0 125 896
- DE-A- 19 611 673
- FR-A- 2 180 383
- US-A- 4 298 562
- US-A- 4 453 723

## Description

This invention relates to a hydrodynamic seal, and to a sealing element for such a seal. Such seals are used between relatively rotating elements such as a shaft and a supporting bearing.

A hydrodynamic seal is described in our earlier specification EP 0125896A. Such seals have proved to be successful in use but occasionally fail due to the hydrodynamic film breaking down locally, resulting in contact between the seal and the adjacent relatively rotating surface. This leads to frictional damage to the seal surface ("burn out") and subsequent leakage.

As described hereafter, the seal comprises one or more elongated fabric-based sealing elements joined end-to-end to form an annulus. We have discovered that a reason for the seal failing has been that a sealing element may over time contract lengthwise (circumferentially of the seal) and cause relative movement or bunching-up of adjacent circumferential portions of the element during use. This leads to an irregular sealing or running surface of the sealing element with "high spots" which break through the hydrodynamic film and cause the seal to fail. Preferred embodiments of the invention are directed to alleviating this problem.

According to the invention there is provided a sealing element of a hydrodynamic seal for relatively rotating elements, having a sealing surface and consisting of or comprising at least one stabilising ply of fabric impregnated with or disposed in a binder material which prevents relative movement of fibres of the fabric during use of the seal.

Preferably the binder is such that it imparts stiffness to the stabilising ply. In preferred examples described herein, preferably the resulting stiffness of the element is such that it resists deformation, or bunching, of the element when it is fitted in the seal.

In some arrangements, the stabilising ply is preferably semi rigid. For example, where the stabilising ply comprises a resin impregnated fabric, the layer may have a thickness of about 0.5 mm to 1.0 mm thick and thus have some flexibility.

Preferably the stiffness of the sealing element is such that the element can respond to changes in pressure as required during service of the seal, while resisting undesirable deformation, for example bunching in an annular sleeve due to hoop stress.

The fabric may be a woven fabric, weft threads of which preferably are disposed transversely of the longest dimension of the element.

The sealing element comprises at least one further ply of flexible material.

Preferably the at least one ply of flexible material comprises a fabric impregnated with or disposed in an elastomeric material.

In some preferred examples, the hardness of the elastomeric material of the flexible ply is less than 80, for example between about 60 and 80 IRHD (International Rubber Hardness Degrees). The elastomeric material may be in the form of an elastomeric coating on the fabric. The apparent hardness of the flexible ply composite material will be harder than that of the elastomeric material itself due to the fabric content.

The hardness and the stiffness of the stabilising ply will generally be greater than that of the flexible ply.

A further aspect of the invention provides a sealing element for a hydrodynamic seal for relatively rotating elements, the sealing element including: a stabilising ply of fabric impregnated with or disposed in a binder material; and a flexible ply comprising an elastomeric material. The binder of the stabilising ply comprises non-elastomeric material. Alternatively, the binder might comprise an elastomeric material which has been stiffened so that the stabilising ply has the desired resistance to deformation or bunching. Preferably the stabilising ply is at least semi-rigid.

For example, the stabilising ply may include an elastomer coated fabric. The hardness of the coating may be for example greater than 70, preferably greater than 80, for example from about 80 to 98 IRHD, or might be rigid (100IRHD). For example, the coating of the binder material may include stiffening resins within an elastomer formulation.

The element is preferably thin and therefore has some flexibility, for example where a phenolic resin impregnated fabric is present, the thickness of the ply including the resin may be less than 1.0 mm.

The stabilising ply and the flexible ply may be bonded together. The stabilising ply and the flexible ply may be separate and/or separable from each other.
There may be a plurality of said plies of flexible material of different stiffness to each other.

At least one said stabilising ply may be laminated between plies of flexible material.

A said stabilising ply may be disposed on one or more of plies of flexible material.

A ply providing the sealing surface may be fixed directly to the or a said stabilising ply. Alternatively the or a said stabilising ply may provide the sealing surface of the element

Preferably the fabric of the or any one or more of said plies is of polyester or an aramid or other dimensionally stable fibre.

The binder material may comprise an elastomer containing a bonding agent which stiffens when vulcanised.

The bonding agent may be between 30% and 75% by volume of the binder material before vulcanisation.

Alternatively the binder material may be a phenolic resin or an epoxy resin The sealing surface may be loaded with PTFE, preferably in powder form.

The sealing surface is grooved. For example, a patterned surface may be provided by the outline of the fibres in a said fabric layer, especially if the fabric is woven.

The sealing element may have a thickness less than 1 mm, for example about 0.5 mm.

Preferably the sealing element is suitable to be fitted as a sleeve in a seal member in a hydrodynamic seal, preferably as a sleeve in an elastomeric member.

In preferred examples, the hardness of the elastomeric member is less than about 80, for example between about 60 and 80 IRHD (International Rubber Hardness Degrees).

The invention also provides a seal member for a hydrodynamic seal for relatively rotating elements, the seal member comprising: a sealing element as defined herein, and an elastomeric member, the sealing element being fitted to a surface of the elastomeric member. The sealing element may be bonded to the elastomeric member, or may be separate. The sealing element may be a sleeve fitted into an aperture of the elastomeric member.

The invention further provides a seal member for a hydrodynamic seal for relatively rotating elements, the seal member comprising: an elastomeric member having an aperture for one of the relatively rotating elements, and a sealing element adapted to be fitted in the aperture between the elastomeric member and the rotating element, the sealing element including a stabilising ply of fabric impregnated with or disposed in a binder material.

The elastomeric member may comprise an elastomeric ring, the sealing element comprising an annular sleeve arranged within the aperture in the ring. The sealing element may be separate and/or separable from the elastomeric member. The invention also provides a hydrodynamic seal comprising a sealing element as set forth above.

The invention will now be described merely by way of example with reference to the accompanying drawings, wherein;
Figure 1 shows a hydrodynamic seal according to the invention;
Figure 2 is a perspective view of a sealing element of figure 1;
Figure 3 are composite views of parts of the radially inner surface of the sealing element of figure 2; and
Figures 4 to 12 show sealing elements according to different embodiments of the invention.

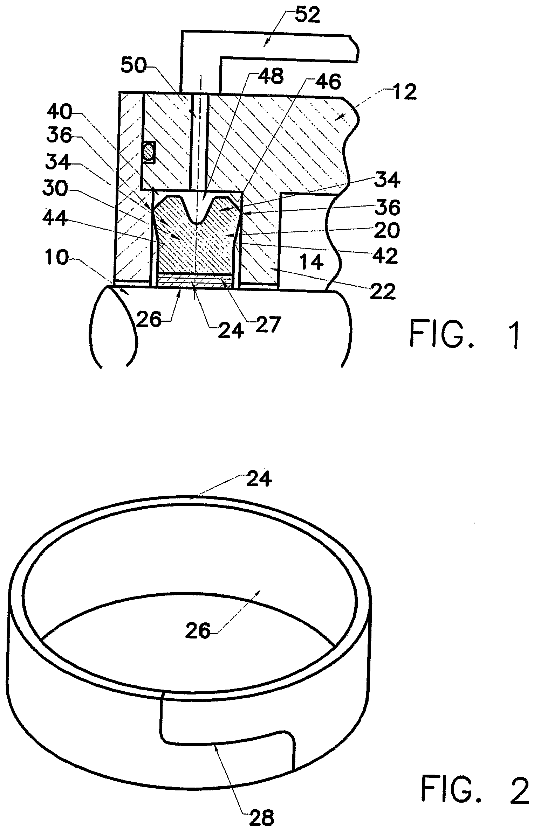

Referring to figures 1 and 2, a seal is provided for sealing the space between a rotating shaft 10 and a stationary member 12 surrounding the shaft, to control leakage of fluid from the space 14 on one side of the seal. The seal comprises a sealing ring 20 fitted in a housing 22. The sealing ring 20 consists of an annular sealing element 24 and an elastomeric ring 30 surrounding the element 24. The element 24 has a cylindrical inner face 26 of a diameter slightly greater than the outside diameter of the shaft 10 and which forms a sealing surface. The outer cylindrical face of the element 24 is in contact with the inner cylindrical face of the elastomeric ring 30 and has a surface which grips the inner surface of the elastomeric ring 30 so as to resist rotation of the sealing element 24 during use of the seal. The outer surface of the element 24 may itself be adequate for this purpose, but if not, a rubber solution, bonding agent or other adhesive, or double-sided adhesive tape may be applied to it.

The element 24 is formed as a elongated strip with its ends overlapping together at 28 so that the element forms a complete annulus. The overlapping joint is formed by the ends of the element being conformingly stepped in a radial plane so that the ends can slide relatively to each other if necessary (eg. if the element should shrink lengthwise slightly) and still provide a continuous annular sealing surface. The element 24 typically can be up to 4 or 5m long, sufficient for a shaft up to about 1.4m diameter. For larger seals, more than one element can be joined together by further lap joints. The elastomeric ring 30 has two lips 34 each having a sealing edge 36 which is an interference fit with the adjacent side wall 42 or 44 of the housing 22.

The housing 22 comprises an annular recess 40 bounded by two side walls 42 and 44, each perpendicular to the axis of rotation of the shaft 10, and a cylindrical wall 46. The radial depth of the recess is greater than that of the sealing ring 20, so that the wall 46 is spaced from the sealing ring. A bore 50 in the housing 22 leads to a cavity 48 defined between the sealing ring 20 and the cylindrical wall of the recess 40 and is connected through a conduit 52 to a source of fluid under pressure.

The radial clearance between the shaft 10 and the inner face 26 of the sealing element is such that, when no radial pressure is applied to the sealing ring (ie. when the fluid pressure in the cavity 48 is equal to the ambient pressure), there is considerable leakage of fluid from the space 14 between the shaft and the seal. In operation, fluid under pressure is supplied through conduit 52 and bore 50 to the cavity 48, and exerts a radially inward force on the elastomeric ring 30. This force is transmitted through the elastomeric ring to the sealing element 24 and causes it to contract, so that the clearance between it and the shaft 10 is reduced. As the fluid pressure applied to the sealing ring increases, the clearance between the sealing element 24 and the shaft 10 decreases and the leakage of fluid from the space 14 between the sealing element and the shaft decreases. The applied fluid pressure is increased until the leakage from the space 14 reaches an acceptably low level.

As long as the applied fluid pressure is not increased to too high a value, the hydrodynamic forces caused by rotation of the shaft then ensure that the film of fluid between the shaft and the inner face 26 of the sealing element 24 prevents physical contact between the element and the shaft. Wear on the sealing ring is therefore considerably reduced, as compared with known seals such as conventional gland packings and lip seals, in which there is no adjustment or control of the rubbing contact force between the seal and the shaft. In addition, the lack of, positive contact between the sealing ring and the shaft reduces considerably the heat generated in the region of the seal. The gap between the elastomeric ring 30 and the cylindrical wall 46 of the recess 40 allows the sealing ring to "float" in the radial direction, so that it can follow slight misalignment of the shaft 10 without uneven contact being made between the sealing surface 26 and the shaft. The use of fluid pressure to energise the sealing ring enables the sealing, and the leakage through the seal to be precisely controlled, and enables the control to be carried out remotely from the region of the seal.

It has been found that a satisfactorily low leakage rate can be obtained with an applied fluid pressure which is approximately equal to the pressure of the fluid to be sealed. This gives the possibility of using the same fluid to provide the energising pressure, for example by connecting the bore 50 or conduit 52 to a suitable location in communication with the space 14. This has the advantage that a separate source of pressurised fluid is not required. It also has the advantage that, should the system pressure of the fluid to be sealed be reduced for any reason, the energising pressure applied to the sealing ring will simultaneously be reduced, so avoiding the risk of the sealing surface 26 being forced into contact with the shaft owing to the drop in pressure of the film of fluid between the sealing surface and the shaft. Similarly, any increase in the system pressure will produce a corresponding increase in the energising pressure. Many other installation variants of the seal are possible, for example all of those shown in EP 0125896A. Kinematic inversions of the installations also are possible, in which the shaft 12 is stationary and the part 14 rotates around it. Also in such cases it is in principle possible that the seal can be arranged "inside-out" with the elastomeric element 20 disposed radially inwardly of the element 24 and expanding it radially outwards. All variants of course embody one or more sealing elements 24 of the invention, examples of which now will be described in more detail.

In a first embodiment, the sealing element 24 is of single-ply construction, and consists of one or more layers 27 (two are illustrated in figure 1) of woven fabric set in a phenolic resin loaded with PTFE powder, for example Tenmat^{®} Feroform^{®} T814. The fabric here is polyester, but could alternatively be of a different material, for example an aramid, or carbon fibre-based. The warp threads of the fabric run lengthwise of the element ie. circumferentially of the installed seal, and the weft threads run across the element. This is the preferred orientation, although for other applications it may be that the weft threads could run lengthwise, or the fabric could be disposed so that both warps and wefts are inclined at an angle to the length of the element 24. The phenolic resin is relatively stiff in compression and prevents any relative movement of different regions of the polyester fabric during use of the seal. In particular it prevents local circumferential compression (bunching-up) of the sealing element in which the spacing of the weft threads of the polyester fabric is locally reduced. The fabric on the other hand is relatively stiff in tension and prevents local circumferential stretching of the sealing element which would otherwise accommodate bunching elsewhere in the element.

The PTFE particles in the resin act as a dry lubricant and result in the sealing surface 26 having very low friction, and thus resistant to transient breakdown of the hydrodynamic film.

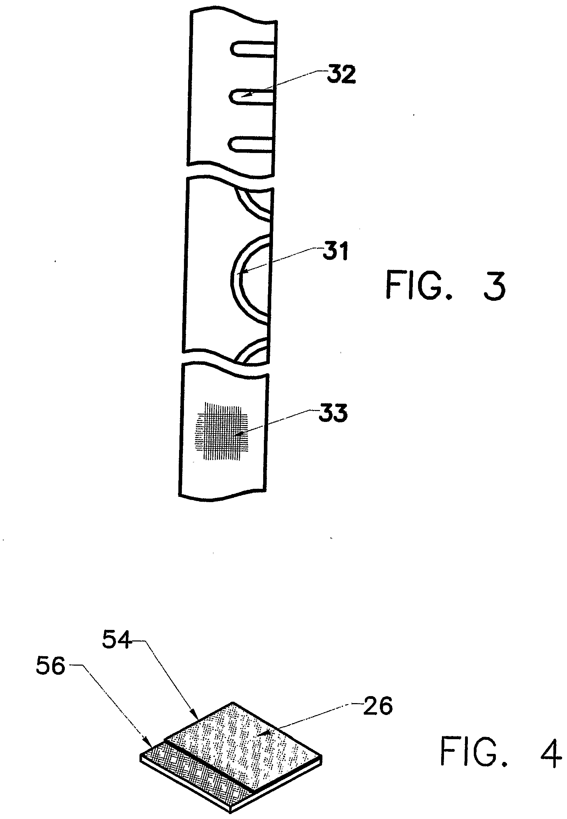

The sealing surface 26 may have arcuate grooves 31, figure 3, extending partway across it from its upstream edge. Alternatively single-ended closed grooves 32 may extend from the upstream edge. These grooves promote the maintenance of the hydrodynamic film during use of the seal at lower rotational speeds then could be achieved with a totally smooth sealing surface. We believe that this is achieved by the grooves providing a local reservoir pressurised of fluid for the regions of the sealing surface remote from the space 14. With the same objective the sealing surface may be textured or patterned (33, figure 3), for example by providing only a relatively thin coating of phenolic resin over the fabric adjacent the sealing surface so that the outline of the woven fibres of the fabric shows through the resin as a reticulated pattern. The resulting interstitial depressions between the fibres act as local reservoirs of pressure fluid for the hydrodynamic film. Alternatively the sealing surface may be patterned by pressing it during curing against a plate having the inverse of the required pattern machined into its surface, or by machining the pattern directly into the cured material.

In one example a 4.3m long sealing element is 19.1mm wide and between 3.2 to 5.4mm thick depending on the application. In this particular embodiment the flexibility of the element is limited and so tends to be best suited for larger diameter seals.

In a second embodiment (figure 4), the sealing element is of two-ply construction. The sealing surface 26 is provided on a first ply 54 comprising one or more layers 56 of fabric eg. of a meta-aramid such as NOMEX^{®} impregnated with a fluoroelastomer, for example FKM, or an acrylonitrile butadiene rubber (NBR) or hydrogenated acrylonitrile butadiene rubber (HNBR) or other elastomer. Preferably the elastomer is loaded with PTFE so that it has self-lubricating antifriction qualities. The ply 54 is bonded onto a second stabilising ply 58 comprising a phenolic resin-impregnated polyester fabric as already described. In this embodiment however the phenolic resin need not be PTFE-Ioaded; an example of a suitable material is Tenmat Feroform T14. A suitable adhesive for bonding the aramid/fluoroelastomer ply 54 to the resin/polyester ply 56 is an epoxy such as Araldite^{®} 2015. The sealing surface 26 of this embodiment may have the same grooved, patterned or textured features as in figure 3. Indeed all embodiments of the invention may incorporate these sealing surface features.

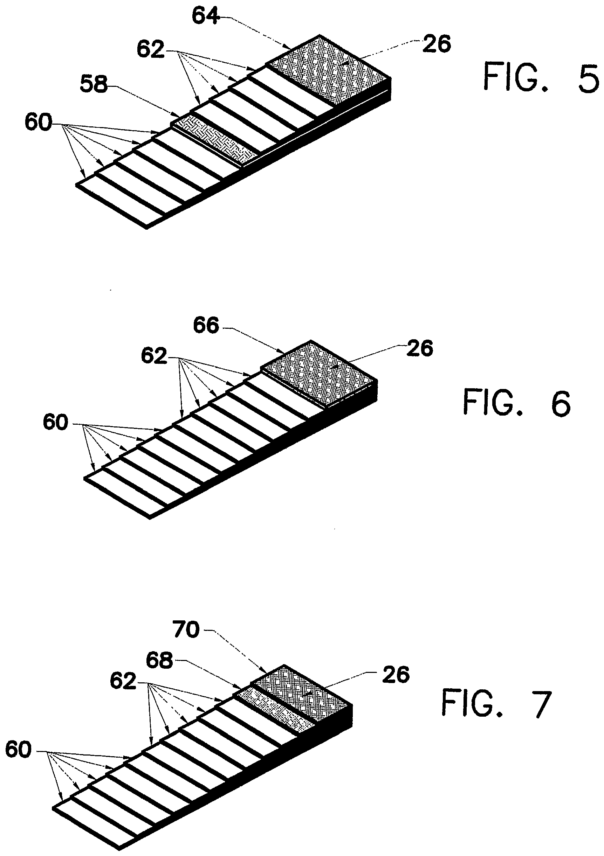

Figure 5 illustrates a multi-ply embodiment of the invention. In this and subsequent figures parts already described carry the same reference numerals. A phenolic resin/polyester (or other) fabric stabilising ply 58 as described in connection with figure 4 here is sandwiched between a lower ply 60 and an upper ply 62 respectively consisting of four and five layers of meta-aramid Nomex fibre, all impregnated with and bonded together by an NBR or HNBR elastomer. On top of the upper ply 62 is a ply 64 providing the sealing surface 26, and formed of the same material as ply 56 of figure 4. The ply 58 is bonded to the plies 60, 62 by an epoxy adhesive or similar, and the ply 64 is bonded to the ply 62 by Dunlop 2000 or similar adhesive.

In the multi-ply embodiment of figure 6, the stabilising ply 58 is omitted, and instead a ply 66 providing the sealing surface 26 is made of a PTFE powder-loaded phenolic resin incorporating at least one layer of fabric, similarly to figure 1. Again, a suitable material is Tenmat Feroform T814 (could also use non PTFE loaded T14, though admittedly without the PTFE it would not be as effective)

In figure 7, the lubricated stabilising ply 66 is replaced by a stabilising ply 68 and a running surface ply 70, respectively of the same construction as plies 56 and 54 of figure 4. Elastomer-coated plies 60, 62 are as described for figures 5 and 6. Thus the running surface 66 typically is Feroform T814, which is laminated against the stabilising layer 58 of Feroform T14. The stabilising layer 58 is bonded to the sub-plies 60 and 62The T814 is difficult to bond directly to the NBR/HNBR sub-plies due to the PTFE content, so it is preferred to press-cure 1 ply of T814 and I ply of T14 together beforehand. The T14 ply is readily bondable to the elastomer-coated sub-plies, and the T814 ply provides a superior low-friction sealing surface.

The elastomer-coated plies 60, 62 are inherently more flexible than are the phenolic resin based stabilising piles. Thus by reducing the thickness of the or each stabilising ply as far as possible (to eg. 0.5mm or less) without compromising its basic function of imparting dimensional stability to the sealing element, and using instead one or more elastomer-coated plies, a more flexible sealing element results, which can be curved to provide smaller-diameter seals than would otherwise be the case. The fabric in the elastomer plies, being of a dimensionally stable meta-aramid or similar, is resistant to stretching whilst the relatively-thin phenolic resin ply has a sufficient compressive strength to resist local bunching.

In a further series of embodiments of the invention, the phenolic resin stabilising plies are replaced by elastomer impregnated fabric stabilising plies in which the elastomer is chosen so as to be relatively stiff when cured. For example Nomex fabric may be impregnated with a mixture of NBR and HNBR or FKM and a bonding agent which securely bonds the elastomer to the fabric, and which stiffens when vulcanised. The bonding agent comprises resins which cross-link on curing (vulcanisation) to form a stiff structure. It may also contain fillers. A suitable bonding agent, especially for HNBR, is Chemosil 360 sold by Lord Corporation. Other similar products are available, for example THIXON^{®} manufactured by Rohm and Haas) but must be chosen (based on published data) to be compatible with the elastomer. The Chemosil 360 can be in the range 30% to 75% of the volume of the total pre-cured mix which consists of rubber solution and bonding agent in solvent. The solvent evaporates prior to curing.

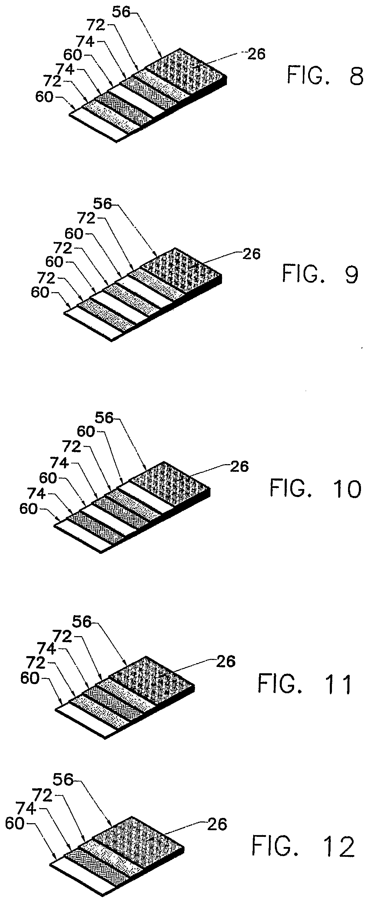

Various degrees of overall stiffness for the sealing element 24 can be achieved without resorting to too many different elastomer mixes by combining plies of stiffened and unstiffened elastomer. Thus in figure 8, elastomer plies of three different stiffnesses are used. Plies 60 are as described for figure 5; plies 72 are stiffened elastomeric plies of a first stiffness and plies 74 are stiffened elastomeric plies of a second stiffness 56 is a sealing surface ply as in figure 4 or 5, and is bonded to the ply 72 by a polychloroprene (Neoprene) based adhesive such as Dunlop^{®} S2000.

Figures 9 to 12 illustrate other possible combinations of different-stiffness plies. Parts previously described carry the same reference numerals in these figures.

It also is possible to use a phenolic-resin based stabilising ply or plies in combination with stiffened and unstiffened elastomer-based stabilising plies. As an example of such an arrangement, some of the plies 60 and/or 62 in figures 5, 6 and 7 could be replaced by plies 72 and/or 74. Another possibility is for the single stabilising ply of figure 1 or the stabilising ply 58 of figure 4 to be replaced by a suitably stiffened elastomer-based ply.

The elastomer-based plies of sealing element 24 are manufactured separately by dipping the loomstate Nomex (or other) fabric in a thin rubber solution or mixture of bonding agent (eg. Chemosil 360) and rubber solution and allowed to dry. The dry dipped fabric is then coated on each side with a thicker rubber solution, preferably by a spreading operation. For example the thicker dough-like solution may be applied by a roller on which the thickness of the solution is controlled by a knife or doctor blade. The fabric is pulled over the roller, and the rubber dough is applied behind the blade, which 'scrapes' or spreads it on to the fabric. Each ply is then press-cured, either separately, or as several plies pressed together, depending on the requirement. For example the plies 60 of figure 5 can be pressed together in one operation, as can the plies 62. The phenolic resin-based stabilising plies (brought in from the manufacturer) are cured separately and then are bonded together with the elastomer-based plies. Alternatively the phenolic resin-based stabilising plies or the stiffened elastomeric stabilising piles may be assembled uncured with the flexible plies (bonding agent having first been applied to their facing surfaces if necessary), and the whole assembly cured in a single operation, provided that the curing requirements (time and temperature) of the plies are compatible. Conveniently the elements 24 are manufactured as relatively wide sheets and then cut into strips of the required width.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

## Claims

1. A sealing element (24) for a hydrodynamic seal for relatively rotating elements (10), the sealing element (24) having a grooved (31, 32) sealing surface (26) **characterised in that** the sealing element (24) consists of or comprises at least one stabilising ply (54, 58, 66, 68) of fabric impregnated with or disposed in a binder material which substantially prevents relative movement of fibres of the fabric during use of the seal; wherein the binder of the stabilising ply (54, 58, 66, 68) comprises non-elastomeric material, and the sealing element (24) further comprises a flexible ply (60, 62) comprising an elastomeric material.

2. The sealing element (24) of claim 1, wherein the stabilising ply (54, 58, 66, 68) and the flexible ply (60, 62) are bonded together.

3. The sealing element (24) of claim 1 or claim 2, wherein the stabilising ply (54, 58, 66, 68) and the flexible ply (60, 62) are separate and/or separable from each other.

4. The sealing element (24) of any of claims 1 to 3, wherein there are a plurality of said plies of flexible material (60, 62) of different stiffness to each other.

5. The sealing element (24) of any of claims 1 to 4, wherein at least one stabilising ply (54, 58, 66, 68) is laminated between plies of flexible material (60, 62).

6. The sealing element (24) of any of claims 1 to 5, wherein a said stabilising ply (54, 58, 66, 68) is disposed on a plurality of plies of flexible material (60, 62).

7. The sealing element (24) of any preceding claim, wherein material providing the sealing surface (26) is fixed directly to the or a said stabilising ply (54, 58, 66, 68).

8. The sealing element (24) of any preceding claim, wherein the or a said stabilising ply (54, 58, 66, 68) provides the sealing surface (26) of the element (24).

9. The sealing element (24) of any preceding claim, wherein the sealing surface (26) is provided by material loaded with PTFE.

10. The sealing element (24) of any preceding claim, being adapted to be fitted as a sleeve in a seal member (12) in a hydrodynamic seal.

11. A seal member (12) for a hydrodynamic seal for relatively rotating elements (10), the seal member (12) comprising: an elastomeric member (30) having an aperture for one of the relatively rotating elements (10), and a sealing element (24) as defined in claim 1 adapted to be fitted in the aperture between the elastomeric member (30) and the rotating element (10).

12. A seal member (12) according to claim 11, wherein the sealing element (24) is separate and/or separable from the elastomeric member (30).

13. A hydrodynamic seal comprising a sealing element (24) or seal member (12) of any preceding claim.

## Patentansprüche

1. Dichtungselement (24) für eine hydrodynamische Dichtung für sich relativ drehende Elemente (10), wobei das Dichtungselement (24) eine mit Nuten versehene (31, 32) Dichtfläche (26) hat, **dadurch gekennzeichnet, dass** das Dichtungselement (24) (aus) wenigstens eine(r) stabilisierende(n) Lage (54, 58, 66, 68) aus Stoff besteht oder aufweist, die mit bzw. in einem Bindematerial imprägniert oder angeordnet ist, das eine relative Bewegung von Fasern des Stoffs während der Verwendung der Dichtung im Wesentlichen verhindert; wobei der Binder der stabilisierenden Lage (54, 58, 66, 68) nichtelastomeres Material umfasst und das Dichtungselement (24) ferner eine flexible Lage (60, 62), die ein elastomeres Material umfasst, aufweist.

2. Dichtungselement (24) nach Anspruch 1, wobei die stabilisierende Lage (54, 58, 66, 68) und die flexible Lage (60, 62) zusammengefügt sind.

3. Dichtungselement (24) nach Anspruch 1 oder Anspruch 2, wobei die stabilisierende Lage (54, 58, 66, 68) und die flexible Lage (60, 62) voneinander separat und/oder trennbar sind.

4. Dichtungselement (24) nach einem der Ansprüche 1 bis 3, wobei es mehrere der genannten Lagen aus flexiblem Material (60, 62) mit voneinander verschiedener Steifigkeit gibt.

5. Dichtungselement (24) nach einem der Ansprüche 1 bis 4, wobei wenigstens eine stabilisierende Lage (54, 58, 66, 68) zwischen Lagen aus flexiblem Material (60, 62) laminiert ist.

6. Dichtungselement (24) nach einem der Ansprüche 1 bis 5, wobei eine genannte stabilisierende Lage (54, 58, 66, 68) auf mehreren Lagen aus flexiblem Material (60, 62) angeordnet ist.

7. Dichtungselement (24) nach einem der vorhergehenden Ansprüche, wobei die Dichtfläche (26) bereitstellendes Material direkt an der oder einer genannten stabilisierenden Lage (54, 58, 66, 68) befestigt ist.

8. Dichtungselement (24) nach einem der vorhergehenden Ansprüche, wobei die oder eine genannte stabilisierende Lage (54, 58, 66, 68) die Dichtfläche (26) des Elements (24) bereitstellt.

9. Dichtungselement (24) nach einem der vorhergehenden Ansprüche, wobei die Dichtfläche (26) von mit PTFE gefülltem Material bereitgestellt wird.

10. Dichtungselement (24) nach einem der vorhergehenden Ansprüche, das ausgeführt ist, um als eine Hülse in einem Dichtungsteil (12) in einer hydrodynamischen Dichtung eingebaut zu sein.

11. Dichtungsteil (12) für eine hydrodynamische Dichtung für sich relativ drehende Elemente (10), wobei das Dichtungsteil (12) Folgendes aufweist: ein elastomeres Element (30) mit einer Öffnung für eines der sich relativ drehenden Elemente (10) und ein Dichtungselement (24) nach Anspruch 1, das ausgeführt ist, um in der Öffnung zwischen dem elastomeren Element (30) und dem sich drehenden Element (10) eingebaut zu sein.

12. Dichtungsteil (12) nach Anspruch 11, wobei das Dichtungselement (24) von dem elastomeren Element (30) separat und/oder trennbar ist.

13. Hydrodynamische Dichtung, die ein Dichtungselement (24) oder ein Dichtungsteil (12) nach einem der vorhergehenden Ansprüche aufweist.

## Revendications

1. Élément d'étanchéité (24) pour joint hydrodynamique pour éléments relativement rotatifs (10), l'élément d'étanchéité (24) ayant une surface d'étanchéité (26) rainurée (31, 32), **caractérisé en ce que** l'élément d'étanchéité (24) consiste en ou comprend au moins un pli de stabilisation (54, 58, 66, 68) de toile imprégnée d'un matériau liant ou disposée dans un matériau liant qui empêche sensiblement le déplacement relatif des fibres de la toile pendant l'utilisation du joint ; le liant du pli de stabilisation (54, 58, 66, 68) comprenant un matériau non élastomère, et l'élément d'étanchéité (24) comprenant en outre un pli souple (60, 62) comprenant un matériau élastomère.

2. Élément d'étanchéité (24) selon la revendication 1, dans lequel le pli de stabilisation (54, 58, 66, 68) et le pli souple (60, 62) sont liés ensemble.

3. Élément d'étanchéité (24) selon la revendication 1 ou 2, dans lequel le pli de stabilisation (54, 58, 66, 68) et le pli souple (60, 62) sont séparés et/ou séparables l'un de l'autre.

4. Élément d'étanchéité (24) selon l'une quelconque des revendications 1 à 3, comprenant une pluralité desdits plis de matériau souple (60, 62) de différentes rigidités les uns par rapport aux autres.

5. Élément d'étanchéité (24) selon l'une quelconque des revendications 1 à 4, dans lequel au moins un pli de stabilisation (54, 58, 66, 68) est laminé entre des plis de matériau souple (60, 62).

6. Élément d'étanchéité (24) selon l'une quelconque des revendications 1 à 5, dans lequel ledit au moins un pli de stabilisation (54, 58, 66, 68) est disposé sur une pluralité de plis de matériau souple (60, 62).

7. Élément d'étanchéité (24) selon l'une quelconque des revendications précédentes, dans lequel le matériau produisant la surface d'étanchéité (26) est fixé directement sur ledit ou ledit au moins pli de stabilisation (54, 58, 66, 68).

8. Élément d'étanchéité (24) selon l'une quelconque des revendications précédentes, dans lequel ledit ou ledit au moins un pli de stabilisation (54, 58, 66, 68) produit la surface d'étanchéité (26) de l'élément (24).

9. Élément d'étanchéité (24) selon l'une quelconque des revendications précédentes, dans lequel la surface d'étanchéité (26) est produite par un matériau chargé en PTFE.

10. Élément d'étanchéité (24) selon l'une quelconque des revendications précédentes, conçu pour être monté en guise de manchon dans un organe d'étanchéité (12) dans un joint hydrodynamique.

11. Organe d'étanchéité (12) pour joint hydrodynamique pour éléments relativement rotatifs (10), l'organe d'étanchéité (12) comprenant : un élément élastomère (30) ayant une ouverture pour un des éléments relativement rotatifs (10), et un élément d'étanchéité (24) tel que défini dans la revendication 1 et conçu pour être monté dans l'ouverture entre l'élément élastomère (30) et l'élément rotatif (10).

12. Organe d'étanchéité (12) selon la revendication 11, dans lequel l'élément d'étanchéité (24) est séparé et/ou séparable de l'organe élastomère (30).

13. Joint hydrodynamique comprenant un élément d'étanchéité (24) ou un organe d'étanchéité (12) selon l'une quelconque des revendications précédentes.
